# EUROPEAN PATENT APPLICATION

(11) **EP 4 226 765 A1**
(43) Date of publication of application: **16.08.2023**
(21) Application number: 23155591.3
(22) Date of filing: 08.02.2023
(51) Int. Cl.: A01K 73/02, A01K 75/00

(54) **TRAWL NET SYSTEM**

(30) Priority: 10.02.2022 DK PA202270052
(71) Applicant: P/F Vónin, 530 Fuglafjørdur (FO)
(72) Inventor: OLSEN, Jógvan P., 530 Fuglafjørður (FO); HAVMAND, Søren, 530 Fuglafjørður (FO)
(74) Representative: Zacco Denmark A/S

(57) **Abstract**

Disclosed herein is a trawl net system (100) for a trawl system such as e.g. a pelagic, semi-pelagic or bottom trawl system with or without trawl doors (190), the trawl net system comprising a meshed trawl net (102) comprising an upper mouth net part (112), a lower mouth net part (114), and two side mouth net parts (116) connecting the upper and lower mouth net parts, a head line (142) connected to the upper mouth net part along a head line length, and a fishing line (142, 144).

## Description

The invention relates to trawl net with a stretched net portion.

### Background

When fishing using a trawl system, it is desired to have the trawl net opened as wide as possible in order to catch as much marine life, such as fish or shellfish, as possible. One way of obtaining this is to add sinkers to the lower mouth net part of the net opening and floats to the upper mouth net part. When the trawl net mouth comes in contact with larger objects, e.g. the lower net mouth part of a bottom trawl system comes into contact with objects on the seabed, the trawl net mouth will normal bounce upwards and the fish or shellfish may slip underneath the trawl net.

Adding additional and/or heavier sinkers to the lower net mouth is one way of reducing the bouncing of the net. However, additional sinkers may have a negative effect on the seabed.

### Summary

Disclosed herein is a trawl net system for a trawl system such as e.g. a pelagic, semi-pelagic or bottom trawl system with or without trawl doors. The trawl net system comprises:
- a meshed trawl net having a forward end and an aft end, wherein the aft end comprises a cod end bag, and wherein the forward end comprises a net mouth comprising an upper mouth net part, a lower mouth net part, and two side mouth net parts connecting the upper and lower mouth net parts, wherein the lower mouth net part has a non-stretched length and a stretched length in direction along the fishing line;
- a head line connected to the upper mouth net part along a head line length; and
- a fishing line connected to the lower mouth net part along a fishing line length;
wherein the fishing line length being between 30% and 300% longer than the non-stretched length in direction along the fishing line of the lower mouth net part.

The stretching of the lower mouth net part length in direction along the fishing line provides for a larger amount of fishing line compared to the conventional net systems, where the fishing line length and the lower mouth net part length along the fishing line are approximately the same. The larger amount of fishing line has the surprising effect that the trawl nets lower mouth seeks downwards towards the ocean floor to a higher extend than for the conventional trawl net systems. The stretched lower mouth net part in turns results in a larger fishing area with a minimum of net material. Having a larger fishing area with the same net allows for a larger catch of fish without using a higher amount of fishing boat fuel. Also, fewer sinkers are needed in order to obtain the same amount of downwards gravitation.

By trawl system is meant a system for fishing, i.e. catching aquatic living beings / marina live, such as fish, shellfish, scrimp, and the likes.

When reference to the head line is made, it is to be understood that head line refers to the line extending from one end of the upper mouth net part to the opposite end of the upper mouth net part. The part of the line extending beyond the upper mouth net part will be referred to with a different notation, i.e. bridle line(s).

Likewise, when reference to the fishing line is made, it is to be understood that fishing line refers to the line extending from one end of the lower mouth net part to the opposite end of the lower mouth net part. The part of the line extending beyond the lower mouth net part will be referred to with a different notation, i.e. bridle line(s).

By the stretched length in direction along the fishing line of the lower mouth net part is meant the total stretched length of the lower mouth net part along the fishing line. Difference in the degree to which the lower mouth net part is stretched along the fishing line compared to the non-stretched length along the fishing line may vary over the length of the lower mouth net part. The reference to a stretched length should therefore be understood to mean the degree to which the total length of the lower mouth net part is stretched along the fishing line compared to the length of a non-stretched lower mouth net part along the fishing line.

The stretched length of the lower mouth net part may correspond to the fishing line length.

By "between X% and Y%" is also included the end points, i.e. X% and Y% is also included in the range.

The stretched length of the lower mouth net part along the fishing line relative to the unstretched length may be between 50% and 300% longer, such as between 50% and 200% longer, such as between 50% and 100% longer, such as between 75% and 150% longer. Locally over the entire length of the lower mouth net part, the amount of stretching may be smaller or larger.

As for the lower mouth net part, the upper mouth net part may also be stretched. The upper mouth net part may have a non-stretched length in direction along the head line and a stretched length in direction along the head line, and the stretched head line length may be between 50% and 300% longer than the non-stretched length of the upper mouth net part in direction along the head line.

In one or more examples, the stretched length of the upper net mouth along the head line relative to the unstretched length part may be between 50% and 300% longer, such as between 50% and 200% longer, such as between 50% and 100% longer, such as between 75% and 150% longer.

The stretching of the upper mouth net part along the head line provides for a larger amount of head line compared to the conventional net systems, where the head line length and the upper mouth net part length along the head line are approximately the same. The larger amount of head line has the surprising effect that the trawl nets upper mouth seeks upwards towards the ocean surface to a higher extend than for the conventional trawl net systems. The stretched upper mouth net part in turn results in a larger fishing area with a minimum of net material. Having a larger fishing area with the same net allows for a larger catch of fish without using a higher amount of fishing boat fuel. In addition, fewer floats may be needed in order to obtain the same amount of upwards forces.

By the stretched length of the upper mouth net part is meant the total stretched length of the upper mouth net part along the head line. Difference in the degree to which the upper mouth net part is stretched along the head line compared to the non-stretched length may vary over the length of the upper mouth net part. The reference to a stretched length should therefore be understood to mean the degree to which the total length of the upper mouth net part is stretched along the head line compared to the length along the head line of a non-stretched upper mouth net part.

The stretched length of the upper mouth net part along the head line may correspond to the head line length.

In one or more examples, the lower mouth net part comprises a plurality of bar meshes and a plurality of slip meshes, wherein the fishing line is connected only to a number of the plurality bar meshes on the lower mouth net part. Likewise, the upper mouth net part may comprise a plurality of bar meshes and a plurality of slip meshes, wherein the head line is connected only to a number of the plurality bar meshes on the upper mouth net part. The connection between the mouth net parts and the head-/fishing line may be to all of the bar meshes and not only a number thereof.

By connected to the bar meshes may be meant that that each bar mesh is sewed to the fishing-/head line by means of separate knots for each bar mesh. Each of the bar meshes on the lower/upper mouth net part, which is connected to the foot/head line may thus be sewed to the foot/head line by a separate knot. Thereby each connecting bar meshes is sewed to the foot/head line by a separate knot. Alternatively, a boarder may be used as a connection and protection means, where the boarder is attached/sewed to the fishing-/head line in one end and to the upper/lower mouth net part in the other end, via e.g. knots. A boarder may therefore serves as an intermediate net piece between the fishing-/head line and the upper/lower mouth net part.

The sewing process is usually conducted by sewing the first bar mesh at the first end of the upper/lower mouth net part to the first end of the head-/fishing line with a separate knot followed by sewing the successive bar mesh to the head-/fishing line until a slip mesh is reached. When reaching a slip mesh, the net is stretched and the subsequent bar mesh is sewed to the head-/fishing line with a separate knot. The process continues with sewing of bar meshes to the head-/fishing line and stretching the net whenever a slip mesh is present. This allows for a stretching of the net along its upper and/or lower mouth net part such that the head line length is between 50% and 300% longer than the non-stretched length of the upper mouth net part and/or the fishing line length being between 30% and 300% longer than the non-stretched length of the lower mouth net part.

The plurality of bar and slip meshes may form one or more patterns including at least one pattern selected from the list of:
- a 2:1 pattern comprising two bar meshes followed by one slip mesh;
- a 1:1 pattern comprising one bar mesh followed by one slip mesh;
- a 1:2 pattern comprising one bar mesh followed by two slip meshes;
- a 1:3 pattern comprising one bar mesh followed by three slip meshes.

The 2:1 pattern allows for a stretching of 50% of the upper/lower mouth net part such that the head-/fishing line length is 50% longer than the non-stretched length of the upper/lower mouth net part.

The 1:1 pattern allows for a stretching of 100% of the upper/lower mouth net part such that the head-/fishing line length is 100% longer than the non-stretched length of the upper/lower mouth net part.

The 1:2 pattern allows for a stretching of 200% of the upper/lower mouth net part such that the head-/fishing line length is 200% longer than the non-stretched length of the upper/lower mouth net part.

The 1:3 pattern allows for a stretching of 300% of the upper/lower mouth net part such that the head-/fishing line length is 300% longer than the non-stretched length of the upper/lower mouth net part.

Additional patterns include a 3:1 pattern comprising three bar meshes followed by one slip mesh, and a 4:1 pattern comprising four bar meshes followed by one slip mesh. These patterns allow for a smaller stretching of 33% and 25%, respectively.

Parts of the upper and/or lower mouth net part may also have a non-patterned section understood in the sense that only bar meshes are present along that section of the upper and/or lower mouth net part. In such section, each consecutive mesh will be connected to the head-/fishing line.

In one or more examples, a lower mouth net part and/or the upper mouth net part comprises a 2:1 pattern at a portion of the lower/upper mouth net part closest to the side mouth net parts, and a 1:1 pattern between the two 2:1 patterns. The lower/upper mouth net part may thus be seen as comprising at least three sections, where the middle section is a 1:1 pattern section and the two out sections have a 2:1 pattern.

In one or more examples, a lower mouth net part and/or the upper mouth net part comprises a 2:1 pattern at a portion of the lower/upper mouth net part closest to the side mouth net parts, a 1:2 pattern at a middle portion of the lower/upper mouth net part and a 1:1 pattern between each of the 2:1 patterns and the 1:1 pattern. The lower/upper mouth net part may thus be seen as comprising at least five sections, where the middle section is a 1:2 pattern section and the two outermost sections have a 2:1 pattern. The two sections between a 1:2 pattern section and the 2:1 pattern middle sections will then be 1:1 pattern sections.

The amount of stretching along the head-/fishing line obtainable in the examples provided above will naturally vary over the length of the lower/upper mouth net part. The degree of stretching as seen over the entire length of the lower/upper mouth net part will vary depending on how many meshes each section contains.

In one or more examples, a plurality of sinkers (e.g. bobbins and rockhoppers) are attached to the fishing line. The plurality of sinkers may be adapted for pulling the lower mouth net part downwards. The plurality of sinkers may be attached to the fishing line by various connection means connected directly or indirectly to one sinker or a plurality of connecting means connected to a sinker line onto which the plurality of sinkers are positioned.

Likewise, a plurality of floats may alternatively or in addition be attached to the head line. The plurality of floats may be adapted for pulling the upper mouth net part upwards. In one or more examples, the plurality of floats may be attached to the head line by various connection means connected directly or indirectly to float or a plurality of connecting means connected to a float line onto which the plurality of floats are positioned. When floats are used, they will typically be an integrated part of the head line or the float line by whirling the floats into said line.

For bottom trawl systems, the lower mouth sinkers come into contact with the ocean floor, and stimulates marine live, such as prawns, to jump from the seabed/ocean floor as the trawl is towed through the water. The short connection chains allow the meshed net to be just clear of the ocean floor as it is the fishing line sinkers which come into contact with the ocean floor and not the meshed net. This minimizes the catch of seabed objects, including sessile benthic animals, and also prevents net damage.

A trawl net normally has a large conical shaped with a bag netting which is drawn along and near the seabed or in a water column to catch the marine life. The size of a trawl net may vary depending on the marine life, which the trawl system is used for fishing. The size of the trawl net may e.g. be defined by the length of the fishing line, the length of the head line, the number of meshes around the net mouth, and/or the size of the meshes around the net mouth. Mesh sizes throughout the trawl net may vary. In some examples, the mesh sizes will be largest in the trawl net part closest to the net mouth and progressively reduce in size towards the cod end.

The net mouth end of the trawl net is often referred to as the bosom and wing part, the middle part of the trawl net is often referred to as the belly, and the rear/aft end of the trawl net is referred to as the cod end.

The size of the meshes in the bosom, i.e. upper part, and wing part may be larger than in the middle part of the trawl net, which again may be larger than the mesh size in the cod end.

The mesh size in the trawl net normally decreases from the wing to cod end in 3 or more stages depending on the design. The mesh size at various sections of the trawl net is decided based on the size of the marine life, which is to be caught. For example, for fish trawl systems, large meshes varying from 5 cm to 20 cm are commonly used, while for shrimp trawl systems, smaller meshes sizes ranging from 4 cm to 5 cm is more commonly used. To allow for escapement of under sized fishes, square mesh panels may be positioned in the cod end.

The meshed net trawl may comprise a top net panel, a bottom net panel, and optionally side panels between the top net panel and the bottom panel. The upper mouth net part is normally formed on the top net panel and the lower mouth net part is normally formed on the bottom net panel.

The trawl net may also be described as a two seam trawl net, where the trawl net comprises the upper top net panel and the lower bottom net panel, which are joined together laterally.

The trawl net may alternatively be described as a four seam trawl net, where the trawl net comprises the upper top net panel, the lower bottom net panel, and two side panels, where each of the two side panels are joined laterally with both the upper top net panel and the lower bottom net panel.

Yet alternatively, a six seam trawl net, where the trawl net comprises six seams may also be present.

The mouth of trawl net may be held open in a number of different manners, e.g. by means of one or more wooden beams, trawls doors, or by connecting the trawl net to two different boats. The use of trawl doors, also referred to as otter boards, are widely known. The main purpose of the trawl doors is therefore to provide a desired horizontal trawl opening. In one or more examples, the trawl system may therefore further comprise a pair of trawl doors.

Each trawls door may be directly connected to an end of the fishing line and an end of the head line.

Alternatively, the trawl doors may be connected to the fishing line and/or the head line by means of one or more bridles. The head line and the fishing line may extend for a short length beyond the mouth of the net. Such an extension line is called a leg or a bridle. Bridles may thus be seen as an extension of the head line and/or the fishing line, where the head line and the fishing line are the only parts directly in contact with the net mouth of the trawl net. In one or more examples, one of the trawl doors may be connected to a first end of the fishing line by a first bridle and to a first end of the head line by a second bridle. The other one of the trawl doors may likewise be connected to a second end of the fishing line by a third bridle and to a second end of the head line by a fourth bridle.

Yet alternatively, a pair of bridles, one being an extension of the head line and the other being an extension of the foot line may be attached to the trawl door through sweep lines during the operation of the net.

The trawl doors may be connected to the trawl boat by warps.

The net parts extending from the side mouth net parts may also be referred to the wings, i.e. side extensions of the trawl net extending beyond the mouth of the trawl net between the head line and the foot line. The wings serves the purpose of preventing escape of the marine life from the sides of the trawl net and guides the marine life towards the cod end of the trawl net.

Examples of net materials include polyamine and nylon or the like.

### Brief description of the drawings

Various examples are described hereinafter with reference to the figures. Like reference numerals refer to like elements throughout. Like elements will thus not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.
Figure 1 shows a trawl boat with a trawl net system.
Figure 2A shows a bottom net panel and figure 2B shows a top net panel.
Figure 3A-D show different mesh trawl net patterns.
Figure 5 show how a boarder can be positioned.

### Description of examples

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

In the drawings, thicknesses of a plurality of layers and areas are illustrated in an enlarged manner for clarity and ease of description thereof. When a layer, area, element, or plate is referred to as being "on" another layer, area, element, or plate, it may be directly on the other layer, area, element, or plate, or intervening layers, areas, elements, or plates may be present therebetween. Conversely, when a layer, area, element, or plate is referred to as being "directly on" another layer, area, element, or plate, there are no intervening layers, areas, elements, or plates therebetween. Further when a layer, area, element, or plate is referred to as being "below" another layer, area, element, or plate, it may be directly below the other layer, area, element, or plate, or intervening layers, areas, elements, or plates may be present therebetween. Conversely, when a layer, area, element, or plate is referred to as being "directly below" another layer, area, element, or plate, there are no intervening layers, areas, elements, or plates therebetween.

The spatially relative terms "lower" or "bottom" and "upper" or "top", "below", "beneath", "less", "above", and the like, may be used herein for ease of description to describe the relationship between one element or component and another element or component as illustrated in the drawings. It will be understood that the spatially relative terms are intended to encompass different orientations of the device in use or operation, in addition to the orientation depicted in the drawings. For example, in the case where a device illustrated in the drawings is turned over, elements described as being on the "lower" side of other elements, or "below" or "beneath" another element would then be oriented on "upper" sides of the other elements, or "above" another element. Accordingly, the illustrative term "below" or "beneath" may include both the "lower" and "upper" orientation positions, depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below, and thus the spatially relative terms may be interpreted differently depending on the orientations described.

Throughout the specification, when an element is referred to as being "connected" to another element, the element is "directly connected" to the other element, or "electrically connected" to the other element with one or more intervening elements interposed therebetween.

The terminology used herein is for the purpose of describing particular examples only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

Exemplary examples are described herein with reference to cross section illustrations that are schematic illustrations of idealized examples, wherein like reference numerals refer to like elements throughout the specification. As such, variations from the shapes of the illustrations as a result, for example, of manufacturing techniques and/or tolerances, are to be expected. Thus, examples described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims. Some of the parts, which are not associated with the description, may not be provided in order to specifically describe exemplary examples of the present disclosure.

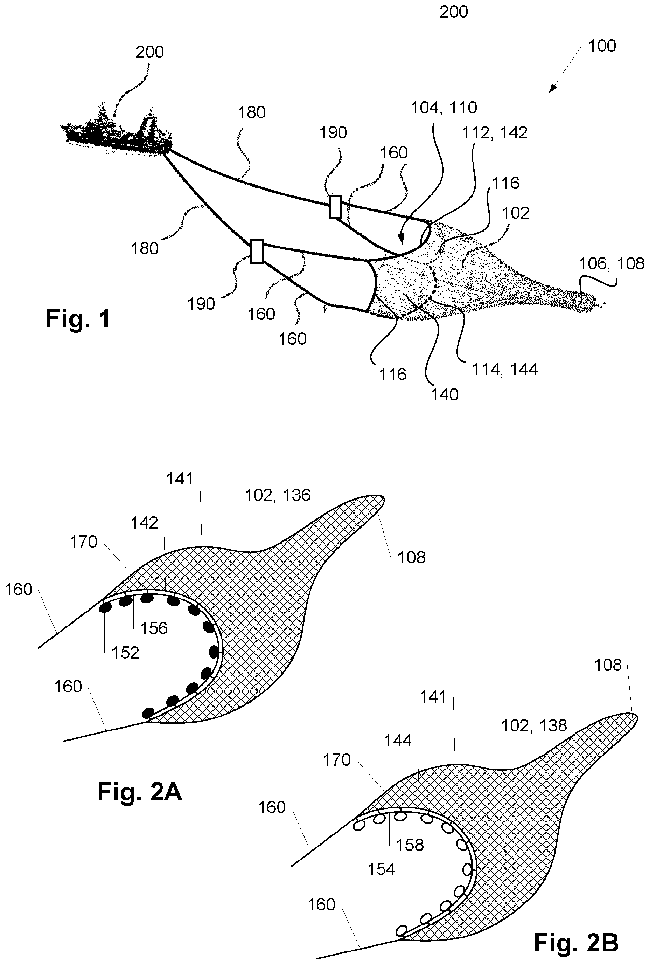

Figure 1 is a perspective view of a conventional trawling operation comprising a trawl boat 200 towing a trawl net system 100 comprising a trawl net 102. At the forward end 104 of the trawl net 102 is the net mouth 110 and at the aft end 106 the trawl net 102 comprises a cod end 108 into which the marine life, e.g. scrimps and fish, is guided to when the trawl boat 200 tows the trawl net system 100 in the sea.

The net mouth 110 have an upper mouth net part 112, a lower mouth net part 114 and two side parts 116. A head line 142 is connected to the upper mouth net part 112 and a foot line 144 connected to the lower mouth net part 114.

A set of a starboard and a port trawl door 190 provide a spreading force for the trawl net 102 being towed by the set of trawl doors 190. The figure shows, how the trawl doors 190 are connected and trawled by the trawl boat 200 via a warp 180 connected to each trawl door 190. The fishing trawl net 102 is connected to each trawl door 190 via two bridles 160. These may be, as shown here, be connected to the trawl door 190 in the aft top and bottom of the trawl door 190.

Figure 2A shows the top net panel 136 of the trawl net 102, where a plurality of floats 152 positioned on a float line 156 each are attached to the head line 142 via a connecting chain 170. The perimeter of the top net panel 136 is connected to a bottom net panel 138 (see figure 2B) or a side panel 140 (see figure 1) by a set of seams 141. Figure 2B shows the bottom net panel 138 of the trawl net 102, where a plurality of sinkers 154 positioned on a sinker line 158 each are attached to the foot line 144 via a connecting chain 170. The perimeter of the bottom net panel 138 is connected to a top net panel 136 (see figure 2A) or a side panel 140 (see figure 1) by a set of seams 141.

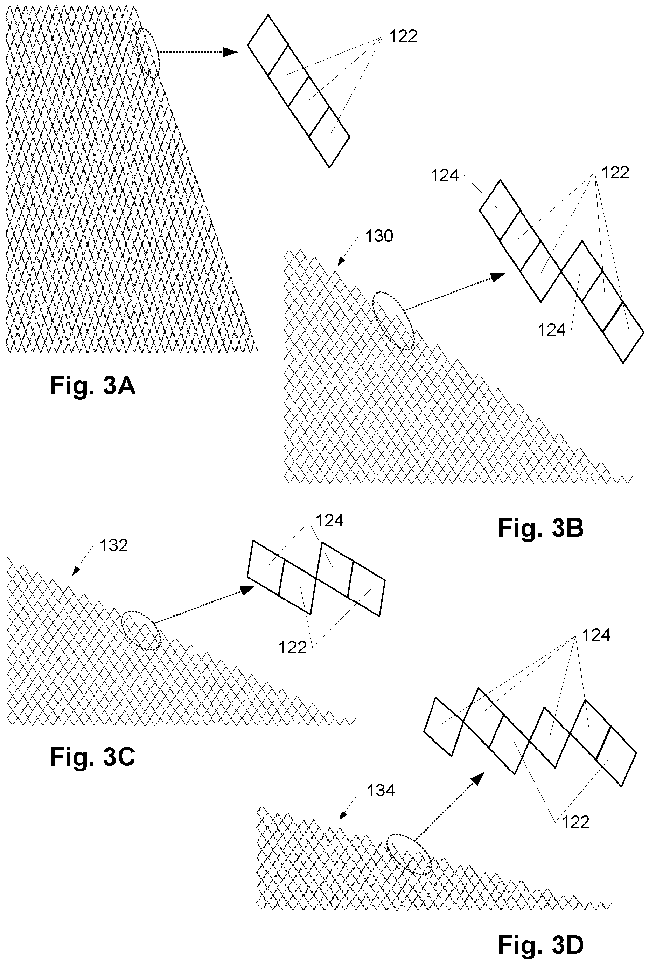

Figure 3A-D show different mesh trawl net patterns. The trawl net shown in figure 3A only has bar meshes 122, i.e. all meshes are sewed to the head line/foot line.

The trawl net shown in figure 3B has a 2:1 pattern 130 with two bar meshes 122 followed by one slip mesh 124, i.e. every third mesh is not sewed to the head line/foot line, but instead stretched to prolong the net length. The 2:1 pattern allows for an approximate 50% stretching of the net.

The trawl net shown in figure 3C has a 1:1 pattern 132 with one bar mesh 122 followed by one slip mesh 124, i.e. every second mesh is not sewed to the head line/foot line, but instead stretched to prolong the net length. The 1:1 pattern allows for an approximate 100% stretching of the net.

The trawl net shown in figure 3D only has a 1:2 pattern 134 with one bar mesh 122 followed by two slip meshes 124, i.e. only every third mesh is sewed to the head line/foot line, and the other meshes stretched to prolong the net length. The 1:2 pattern allows for an approximate 200% stretching of the net.

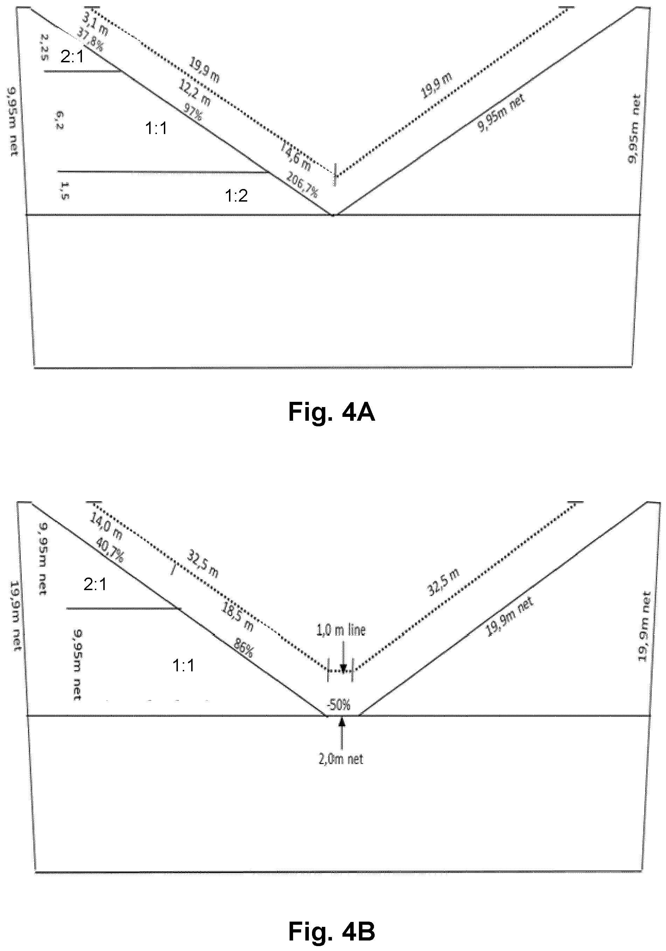

Figure 4A shows a bottom net panel section and how much the net is stretched compared to the foot line. The net is divided into three sections, where the first section has a 2:1 pattern providing for a stretching of 37.8% in the shown example. The next section has a 1:1 pattern, which provides for a 97% stretching. This section is followed by a 1:2 smaller section in the middle of the net providing a 206.7% stretching. The net has a symmetrical shape with the same sections on the other side. The foot line has a total length of 39.8 meter and the trawl net at the lower mouth net part has a non-stretched length of 19.9 meter. The total stretching of the lower mouth net part is therefore 100% in the example shown in figure 4A.

Figure 4B shows a top net panel section and how much the net is stretched compared to the head line. The net is divided into three sections, where the first and outermost section has a 2:1 pattern providing for a stretching of 40.7% in the shown example. The next section has a 1:1 pattern, which provides for 85% stretching. This section is followed by a smaller section in the middle of the net, where a larger amount of meshes are present providing for a negative stretching of minus 50% (-50%). The head line has a total length of 66.0 meter and the trawl net at the upper mouth net part has a non-stretched length of 41.8 meter. The total stretching of the upper mouth net part is therefore 58% in the example shown in figure 4B.

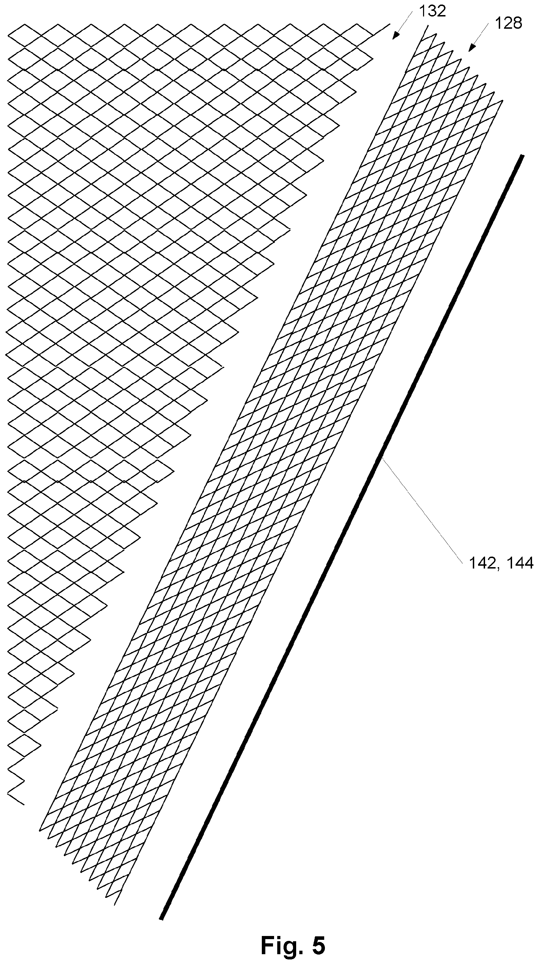

Figure 5 shows how a boarder 128 can be positioned between a 1:1 pattern 132 with one bar mesh 122 followed by one slip mesh 124 and a head-/fishing line 142, 144.

### References

- 100: trawl net system
- 102: trawl net
- 104: forward end of the trawl net
- 106: aft end of the trawl net
- 108: cod end
- 110: net mouth
- 112: upper mouth net part
- 114: lower mouth net part
- 116: side mouth part, wing
- 118: non-stretched length
- 120: stretched length
- 122: bar mesh
- 124: slip mesh
- 126: connecting point
- 128: Boarder
- 130: 2:1 pattern section
- 132: 1:1 pattern section
- 134: 1:2 pattern section
- 136: top net panel
- 138: bottom net panel
- 140: side panels
- 141: seam
- 142: head line
- 144: fishing line
- 152: floats
- 154: sinker
- 156: float line
- 158: sinker line
- 160: bridle
- 170: connection means
- 180: warp
- 190: trawl door
- 200: trawl boat, towing boat

## Claims

1. A trawl net system (100) for a trawl system such as e.g. a pelagic, semi-pelagic or bottom trawl system with or without trawl doors, the trawl net system comprising:
• a meshed trawl net (102) having a forward end (104) and an aft end (106), wherein the aft end comprises a cod end bag (108), and wherein the forward end comprises a net mouth (110) comprising an upper mouth net part (112), a lower mouth net part (114), and two side mouth net parts (116) connecting the upper and lower mouth net parts, wherein the lower mouth net part has a non-stretched length along the fishing line and a stretched length along the fishing line;
• a head line (142) connected to the upper mouth net part along a head line length; and
• a fishing line (144) connected to the lower mouth net part along a fishing line length;
wherein the fishing line length being between 30% and 300% longer than the non-stretched length along the fishing line of the lower mouth net part.

2. The trawl system according to any preceding claim, wherein the upper mouth net part has a non-stretched length along the head line and a stretched length along the head line, the head line length being between 50% and 300% longer than the non-stretched length along the head line of the upper mouth net part.

3. The trawl system according to any preceding claim, wherein the stretched length of the lower and/or upper mouth net part is between 50% and 300% longer, such as between 50% and 200% longer, such as between 50% and 100% longer, such as between 75% and 150% longer.

4. The trawl system according to any preceding claim, wherein the lower mouth net part comprises a plurality of bar meshes and a plurality of slip meshes, wherein the fishing line is connected only to a number of the plurality bar meshes on the lower mouth net part, and/or
the upper mouth net part comprises a plurality of bar meshes and a plurality of slip meshes, wherein the head line is connected only to a number of the plurality bar meshes on the upper mouth net part.

5. The trawl system according to claim 4, wherein each of the bar meshes on the lower/upper mouth net part being connected to the fishing line/head line is sewed to the fishing line/head line by a separate knot.

6. The trawl system according to claim 4 or 5, wherein the plurality of bar and slip meshes form one or more patterns including at least one pattern selected from the list of:
∘ a 2:1 pattern comprising two bar meshes followed by one slip mesh;
∘ a 1:1 pattern comprising one bar mesh followed by one slip mesh;
∘ a 1:2 pattern comprising one bar mesh followed by two slip meshes;
∘ a 1:3 pattern comprising one bar mesh followed by three slip meshes.

7. The trawl system according to claim 6, wherein a lower mouth net part and/or the upper mouth net part comprises a 2:1 pattern at a portion of the lower/upper mouth net part closest to the side mouth net parts, and a 1:1 pattern between the two 2:1 patterns.

8. The trawl system according to claim 6, wherein a lower mouth net part and/or the upper mouth net part comprises a 2:1 pattern at a portion of the lower/upper mouth net part closest to the side mouth net parts, a 1:2 pattern at a middle portion of the lower/upper mouth net part and a 1:1 pattern between each of the 2:1 patterns and the 1:1 pattern.

9. The trawl system according to any preceding claim, wherein a plurality of sinkers (154) are attached to the fishing line and/or a plurality of floats (152) are attached to the head line, the plurality of sinkers being adapted for pulling the lower mouth net part downwards and the plurality of floats being adapted for pulling the upper mouth net part upwards.

10. The trawl system according to claim 8, wherein the plurality of sinkers are attached to the fishing line by a first plurality of short connection chains (170), wherein each of the first plurality of short connection chains is connected directly to one sinker or the first plurality of short connection chains are connected to a sinker line (158) onto which the plurality of sinkers are positioned, and/or
the plurality of floats are attached to the head line by a second plurality of short connection chains (170), wherein each of the second plurality of short connection chains is connected directly to one float or the second plurality of short connection chains are connected to a float line (156) onto which the plurality of floats are positioned.
